(19) Europäisches Patentamt
European Patent Office
Office européen des brevets

(11) **EP 3 945 308 B1**

(12) **FASCICULE DE BREVET EUROPEEN**

(45) Date de publication et mention de la délivrance du brevet:
**10.06.2026 Bulletin 2026/24**

(21) Numéro de dépôt: **21187602.4**

(22) Date de dépôt: **26.07.2021**

(51) Classification Internationale des Brevets (IPC):
**G01N 23/2055** (2018.01)   **G01N 23/207** (2018.01)
**G01L 1/25** (2006.01)   **G01B 15/04** (2006.01)
**G01B 15/06** (2006.01)

(52) Classification Coopérative des Brevets (CPC):
**G01N 23/2055; G01L 1/25; G01N 23/207;**
G01B 15/06; G01N 2203/0075

(54) **METHODE DE DETERMINATION DES PROPRIETES ELASTIQUES D'UN FILM MINCE PAR DIFFRACTION DES RAYONS X**

METHODE ZUR BESTIMMUNG DER ELASTISCHEN EIGENSCHAFTEN EINER DÜNNSCHICHT DURCH BEUGUNG VON RÖNTGENSTRAHLEN

METHOD FOR DETERMINING THE ELASTIC PROPERTIES OF A THIN FILM BY X-RAY DIFFRACTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.07.2020 FR 2008112**

(43) Date de publication de la demande:
**02.02.2022 Bulletin 2022/05**

(73) Titulaire: **Commissariat à l'Energie Atomique et aux Energies Alternatives**
**75015 Paris (FR)**

(72) Inventeur: **FILLOT, Frédéric**
**38054 GRENOBLE CEDEX 09 (FR)**

(74) Mandataire: **Santarelli**
**Tour Trinity**
**1 bis Place de la Défense**
**92400 Courbevoie (FR)**

(56) Documents cités:
- **FU WEI-EN ET AL: "Determination of Young's modulus and Poisson's ratio of thin films by X-ray methods", THIN SOLID FILMS, vol. 544, 1 October 2013 (2013-10-01), AMSTERDAM, NL, pages 201 - 205, XP055794929, ISSN: 0040-6090, DOI: 10.1016/j.tsf.2013.03.121**
- **SEGMULLER A ET AL: "X-ray diffraction studies of thin films and multilayer structures", PROGRESS IN CRYSTAL GROWTH AND CHARACTERIZATION, PERGAMON, OXFORD, GB, vol. 18, 1 January 1989 (1989-01-01), pages 21 - 66, XP025635858, ISSN: 0146-3535, [retrieved on 19890101], DOI: 10.1016/ 0146-3535(89)90024-5**
- **KECKES J. ET AL: "High-temperature residual stresses in thin films characterized by x-ray diffraction substrate curvature method", REVIEW OF SCIENTIFIC INSTRUMENTS, vol. 78, no. 3, 1 March 2007 (2007-03-01), US, pages 036103, XP055794927, ISSN: 0034-6748, DOI: 10.1063/1.2535857**
- **LEE J.W. ET AL: "Lattice curvature induced substrate X-ray line broadening in InGaP/GaAs heterostructures", MATERIALS SCIENCE AND ENGINEERING: B, vol. 26, no. 2-3, 1 September 1994 (1994-09-01), AMSTERDAM, NL, pages 167 - 174, XP093054309, ISSN: 0921-5107, DOI: 10.1016/0921-5107(94)90167-8**

**Description**

**DOMAINE TECHNIQUE ET ÉTAT DE LA TECHNIQUE ANTÉRIEURE**

La présente invention se rapporte à une méthode de détermination des propriétés élastiques d'un film mince par diffraction des rayons X.

Les dispositifs micro et nanoélectroniques mettent en œuvre des couches minces. Lors de la fabrication des composants électroniques, les substrats subissent un « budget » thermique important qui peut engendrer fréquemment des problèmes mécaniques au cours de leur fabrication, notamment résultant des phénomènes de dilatation, de cristallisation, de changements de phase, de variation de volume, de diffusion... Ces problèmes mécaniques peuvent être des problèmes d'adhérence, d'apparition de contraintes, de création de trous (« voids » en terminologie anglo-saxonne), de création de défauts, de création d'extrusions...

Pour limiter l'apparition de ces problèmes qui sont d'ordre mécanique, la simulation numérique des structures peut être une approche pour mieux les appréhender. Néanmoins, de telles simulations nécessitent la connaissance de certaines propriétés physiques comme les constantes élastiques d'un matériau, plus particulièrement lorsqu'il est sous forme de couche mince.

On cherche donc à pouvoir déterminer les constantes élastiques du matériau en couche mince, en particulier son module élastique ou module d'Young et son coefficient de Poisson.

Les méthodes connues mettant en œuvre la diffraction de rayons X requièrent généralement plusieurs mesures relativement longues et un échantillon de grande taille.

Par exemple, le document E. Eiper, K. J. Martinschitz, and J. Keckes, « Combined elastic strain and macroscopic stress characterization in polycrystalline Cu thin films», Powder Diffraction 21 (1), 2006 décrit une technique de mesure des propriétés élastiques dans un film mince par courbure et « X-map ». Les constantes élastiques de couches minces sont déduites de mesure de rayons X en couplant la méthode $\sin^2\psi$ et la technique de courbure du substrat. Par diffraction des rayons X, les déformations élastiques dans les films sont déterminées à l'aide de la méthode $\sin^2\psi$ tandis que les contraintes macroscopiques sont évaluées en mesurant la courbure du substrat. Les contraintes sont calculées à l'aide de la formule de Stoney à partir du rayon du substrat. La courbure est déterminée par la mesure de la position de la rocking curve de la réflexion du substrat à différentes positions sur l'échantillon (méthode X-map). Cette méthode nécessite plusieurs mesures, relativement longues, et consiste en un balayage sur l'échantillon, elle requiert donc un échantillon de grande taille. Elle nécessite également une platine de translation X-Y et un faisceau submillimétrique.

Le document "Determination of Young's modulus and Poisson's ratio of thin films by X-ray method", Fu Wei-En et al, Thin Solid Films, Volume 544, 2013, Pages 201-205 divulgue une mesure de la "rocking-curve" à différents endroits de l'échantillon pour déterminer les contraintes élastiques du matériau par rayons X.

**EXPOSÉ DE L'INVENTION**

C'est par conséquent un but de la présente invention d'offrir une méthode de détermination des constantes élastiques d'un matériau en film mince par diffraction de rayons X relativement rapide et offrant une très bonne précision.

Le but énoncé ci-dessus est atteint par une méthode comprenant :

- la mesure des déformations dans le plan et hors-plan du film mince par diffraction de rayons X,
- la détermination de la contrainte à partir de la valeur de la largeur à mi-hauteur de la rocking curve par diffraction de rayons X du substrat,
- calcul du coefficient de poisson à partir des déformations dans le plan et hors-plan,
- calcul du module d'élasticité à partir du coefficient de Poisson et de la contrainte.

La méthode selon l'invention est très rapide et permet avantageusement d'utiliser le même équipement qui est adapté pour la détermination de la déformation et la détermination de la contrainte.

De manière très avantageuse, on réalise les mesures en faisant varier la contrainte ou la déformation dans le domaine élastique, ce qui permet d'obtenir des valeurs de constantes élastiques plus fiables.

Au cours de la variation de contrainte ou de déformation, les trois mesures : déformation dans le plan, déformation hors-plan et variation de contrainte sont réalisées. Les trois mesures sont effectuées sur le même échantillon.

Dans un exemple préféré, la variation de la contrainte ou de la déformation est obtenue à température constante.

L'un des objets de la présente demande est alors un procédé de détermination du module élastique E et du coefficient de poisson v d'un film mince formé sur un substrat, comportant :

a) une détermination d'une déformation hors-plan par diffraction de rayons X,

b) une détermination d'une déformation dans le plan du film mince par diffraction de rayons X,

c) une détermination d'une contrainte dans le film par mesure de la largeur à mi-hauteur $\beta_{RC}$ de la rocking curve par diffraction de rayons X du substrat,

d) un calcul du coefficient de poisson v à partir de la déformation dans le plan et de la déformation hors-plan,

e) un calcul du module élastique E à partir de la contrainte déterminée à l'étape c) et du coefficient de poisson v déterminé à l'étape d).

Au moins lors de l'étape c), on applique une variation de contrainte ou de déformation au film mince, de sorte que le film mince passe d'un premier état à un deuxième état et on détermine la variation de contrainte dans le film mince par détermination d'une variation de $\beta_{RC}$ à partir d'une série de mesures de diffraction par diffraction de rayons X à différents instants.

Les étapes a) et b) peuvent comporter respectivement la mesure du paramètre de maille hors-plan et la mesure du paramètre de maille dans le plan.

De préférence, les mesures sont réalisées au moyen d'un goniomètre, et les étapes a) à c) sont réalisées successivement sur un même goniomètre.

Selon une caractéristique additionnelle, le goniomètre est réglé entre deux étapes de détermination.

L'étape c) est de préférence une mesure de diffraction de rayons X à haute résolution.

Le procédé de détermination selon la demande, comportant :

- lors de l'étape a), une application d'une variation de contrainte ou de déformation au film mince, de sorte que le film mince passe d'un premier état à un deuxième état et une détermination de la déformation hors-plan à partir d'une série de mesures par diffraction de rayons X à différents instants,
- lors de l'étape b), une application d'une variation de contrainte ou de déformation au film mince, de sorte que le film mince passe du premier état au deuxième état et une détermination de la déformation dans le plan à partir d'une série de mesures par diffraction de rayons X à différents instants,
- un traçage de l'évolution de la contrainte en fonction de la déformation hors-plan de manière à obtenir une régression linéaire sur au moins un intervalle de ladite variation et un calcul de la pente de la régression linéaire qui est égale à -E/2v,
- un traçage de l'évolution de contrainte en fonction de la déformation dans le plan de manière à obtenir une régression linéaire sur au moins un intervalle de ladite variation et un calcul de la pente de ladite régression linéaire qui est égale à E/1-v, et
- une détermination du module d'élasticité E et du coefficient de poisson v à partir des valeurs de pentes obtenues.

De manière préférée, l'application d'une variation de contrainte ou de déformation au film mince pendant les première et deuxième étapes et/ou la troisième phase s'effectue à température constante dont la valeur assure le passage du premier état au deuxième état. Par exemple, la variation de contrainte ou de déformation du film est due à un passage d'un état au moins en partie amorphe à un état au moins en partie cristallin, à un changement de volume, à un changement de phase, à une densification ou à une relaxation.

L'échantillon peut alors être placé dans une chambre de recuit autorisant les rayons X atteindre le film mince et la collecte des rayons X diffractés.

Il peut être prévu d'appliquer un traitement au film mince entre deux séries de mesures de sorte qu'il soit dans le premier état, par exemple amorphe.

La durée entre deux instants peut être au moins égale à la durée d'une mesure.

## BRÈVE DESCRIPTION DES DESSINS

La présente invention sera mieux comprise sur la base de la description qui va suivre et des dessins en annexe sur lesquels:

La figure 1 est une représentation schématique d'un appareillage de mesure par diffraction de rayons X pouvant être utilisé pour la mise en œuvre de la méthode selon l'invention.

La figure 2 est une représentation de l'évolution du paramètre de maille dans le plan en Angström en fonction du temps t en min pour un film mince de GST à la température Tx = 125°C.

La figure 3 est une représentation de l'évolution du paramètre de maille hors-plan en Angström en fonction du temps t en min pour un film mince de GST à la température Tx.

La figure 4 est une représentation de rocking curves à différents instants de mesure pour le film mince de GST à la température Tx.

La figure 5 est une représentation de l'évolution du $\beta_{RC}$ en ° en fonction du temps t en min calculée à partir des rocking curves de la figure 4.

La figure 6A est une représentation de l'évolution de la variation de contrainte $\Delta\sigma$ en MPa de la couche de GST en fonction de la déformation dans le plan à la température Tx.

La figure 6B est une représentation de l'évolution de la variation de contrainte $\Delta\sigma$ en MPa de la couche de GST en fonction de la déformation hors-plan à la température Tx.

## EXPOSÉ DÉTAILLÉ DE MODES DE RÉALISATION PARTICULIERS

La méthode de détermination selon l'invention a pour but de déterminer les constantes élastiques d'un film mince déposé sur un substrat.

Les constantes élastiques sont le module élastique ou module d'Young, généralement désigné E, et qui est la contrainte mécanique qui engendrerait un allongement de 100% de la longueur initiale d'un matériau, et le coefficient de Poisson, généralement désigné v, qui permet de caractériser la contraction de la matière perpendiculairement à la direction de l'effort appliqué.

Pendant au moins une phase du déroulement de la méthode de détermination, le film mince est en un matériau au moins en partie cristallin. Le film mince a une épaisseur hf comprise entre 100nm et 100μm, plus particulièrement l'épaisseur du film mince dans l'exemple est de 500 nm.

Le substrat a une épaisseur hs comprise entre 10μm et 1000μm. Selon l'exemple, l'épaisseur du substrat est de 250 μm.

Le rapport hs²/hf est préférentiellement compris entre 0,1 et 0,3.

La méthode selon un exemple de réalisation comporte :

a) La détermination de la déformation hors-plan du film mince par diffraction de rayons X.
b) La détermination de la déformation dans le plan du film mince par diffraction de rayons X.
c) La détermination de la contrainte par diffraction de rayons X.
d) Calcul du coefficient de Poisson.
e) Calcul du module d'Young.

L'ordre des étapes a) à c) n'est pas nécessairement chronologique, l'étape c) peut avoir lieu avant les étapes a) et b) et l'étape b) peut avoir lieu avant l'étape a). De préférence les étapes a) et b) se suivent, en effet le changement d'optiques pour la mesure de la déformation hors-plan et la déformation peut être réalisée automatiquement, ce qui simplifie le procédé de mesure.

Les différentes étapes vont être décrites en détail ci-dessous.

Les mesures de diffraction de rayons X ou RX sont réalisées avec un diffractomètre de rayons X à goniomètre permettant d'orienter l'échantillon et le détecteur selon différents angles.

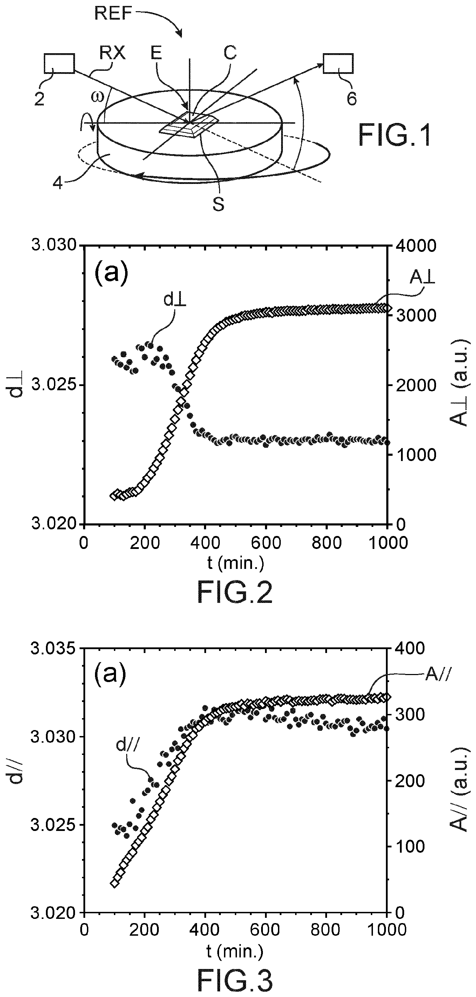

Sur la figure 1, on peut voir une représentation schématique d'un diffractomètre REF comportant une source 2 de rayons X, un porte-échantillon 4 et un détecteur 6 des rayons X diffractés. Le détecteur 6 est par exemple un dispositif scintillateur ponctuel. Par exemple, la source de rayons X 2 est par exemple un tube à rayons X, un générateur à anode tournante, une source synchrotron, ou une micro-source à rayons X microfocus.

Le porte-échantillon 4, destiné à supporter l'échantillon E, est monté articulé autour d'au moins trois axes du plan pour modifier l'orientation de l'échantillon par rapport au faisceau incident. Le détecteur 6 est également avantageusement mobile autour d'au moins deux axes.

Les différentes orientations pouvant être prises par le porte-échantillon et par le détecteur sont celles permettant les différentes mesures requises par la méthode selon l'invention.

Le diffractomètre REF comporte également des optiques sur le trajet du faisceau incident et sur le trajet des rayons X diffractés. Ces optiques sont avantageusement adaptables en fonction des mesures réalisées.

L'échantillon E comporte une couche mince C en un matériau donné, dont on veut déterminer le module élastique et le coefficient de Poisson, formée sur un substrat S en un autre matériau donné. La couche mince C est par exemple formée par dépôt ou par épitaxie.

Les expressions « couche mince » ou « film mince » sont considérées comme synonymes.

La couche mince présente par exemple une épaisseur de l'ordre de quelques centaines de nm. La couche mince est par exemple formée par dépôt physique en phase vapeur ou dépôt chimique en phase vapeur.

La méthode de détermination selon l'invention ne requiert pas que le film mince soit réalisé avec un soin particulier.

Lors de l'étape a), le diffractomètre est réglé pour permettre la mesure des paramètres de maille du film mince.

Lors de l'étape a), l'échantillon est orienté et le détecteur tourne de manière à faire diffracter les plans inter-réticulaires hors-plan. Les signaux obtenus forment un pic de diffraction qui permet de mesurer le paramètre de maille d dans la direction hors-plan et de déterminer la déformation hors-plan $\varepsilon^\perp$ en utilisant la formule suivante :

$$\varepsilon_\perp = \frac{d_\perp - d_0}{d_0}(I)$$

avec $d_0$ le paramètre de maille dans un état relaxé.

Cette technique de calcul du paramètre de maille est connue de l'homme du métier.

Lors de l'étape b) de détermination de la déformation dans le plan, l'optique est changée et le goniomètre est réglé de manière connue. L'échantillon est ensuite orienté et le détecteur tourne de manière à faire diffracter les plans inter-réticulaires dans le plan, ce qui permet de mesurer le paramètre de maille de la couche mince dans la direction du plan.

Les signaux obtenus forment un pic de diffraction qui permet de mesurer le paramètre de maille d dans la direction du plan et de déterminer la déformation dans le plan $\varepsilon_{/\!/}$ en utilisant la formule suivante :

$$\varepsilon_{\|} = \frac{d_f - d_0}{d_0}(II)$$

Avec $d_0$ le paramètre de maille dans un état relaxé.

Pour mettre en œuvre l'étape c) permettant de déterminer la contrainte dans le film mince, les réglages du diffractomètre sont modifiés ainsi que les optiques. Selon un exemple, des optiques très résolues sont utilisées. L'étape c) consiste à mesurer la « rocking curve » RC (désignée courbe d'oscillation en français) du substrat, i.e. la variation du signal en fonction de l'angle ω entre le faisceau incident et la surface de l'échantillon (figure 1). On mesure la courbure du substrat à travers le $\beta_{RC}$.

La mesure qui nous intéresse est la largeur à mi-hauteur ou FWHM (Full Width at Half Maximum en terminologie anglo-saxonne) de la rocking curve. Cette mesure est désignée $\beta_{RC}$.

On réalise donc une mesure des rayons X diffractés en faisant varier l'angle $\omega$ et en condition de diffraction sur le substrat. On trace la courbe correspondante et on mesure le $\beta_{RC}$, par ajustement de la courbe.

De préférence, on travaille en contrainte relative, ce qui permet d'avoir une mesure plus rapide. En effet, en travaillant en contrainte relative une seule mesure suffit et cela permet également de s'affranchir de l'effet de courbure initiale et de l'effet dit d'élargissement instrumental du $\beta_{RC}$, et d'autre composantes initiales qui sont indépendantes de la variation de contrainte. On utilise le $\beta_{RC}$ de la rocking curve sur une surface d'échantillon plus large que celle utilisée dans la méthode « x-map » qui utilise la position de la rocking curve en fonction de x. Le fait de travailler en contrainte relative permet ainsi de corréler directement la variation $\Delta\beta_{RC}$ à la variation de contrainte.

Il est à noter qu'il est fait l'hypothèse que l'on connaît de la littérature les constantes élastiques du substrat Es, vs, et que l'on peut mesurer l'épaisseur du substrat hf et celle du film mince hs, ainsi que la géométrie du goniomètre, en particulier la largeur W et de l'angle de Bragg $\theta_B$.

La variation de contrainte est alors exprimée de la façon suivante et est donc directement proportionnelle à la variation de $\beta_{RC}$ mesurée.

$$\Delta\sigma = \frac{E_s.h_s^2}{6(1-\nu_s).h_f} \cdot \frac{sin\theta_B}{W} . \Delta\beta_{RC} \text{ (III)}$$

La mesure de l'évolution de la largeur à mi-hauteur $\Delta\beta_{RC}$ permet de calculer la variation de la contrainte $\Delta\sigma$ dans la couche C.

Lors de l'étape d), à partir de mesures de déformation dans le plan et hors-plan, il est possible de déterminer le coefficient de Poisson avec la formule suivante :

$$\frac{\varepsilon_{\perp}}{\varepsilon_{//}} = \frac{-2\nu}{1-\nu} \text{ (IV)}$$

Ensuite, lors de l'étape e), on détermine le module d'élasticité E (module de Young) de la couche C.

Dans un film mince polycristallin, la déformation en fonction de la contrainte s'écrit :

$$\varepsilon^{\psi} = \frac{1+\nu}{E}sin^2\psi.\sigma - \frac{2\nu}{E}.\sigma$$

avec $\varepsilon$ la déformation, $\sigma$ la contrainte bi axiale, E le module d'Young et $\nu$ le coefficient de Poisson. L'angle $\psi$ est l'angle de tilt des plans considérés.

Dans la direction hors-plan, $\psi = 0°$, $\varepsilon^{\perp} = (-2\nu/E)\times\sigma$ (V)

Dans la direction dans le plan $\psi = 90°$, $\varepsilon_{//} = (1-\nu/E)\times\sigma$ (VI)

Le module d'élasticité E peut donc être calculé à partir de la formue III.

En faisant certaines hypothèses, il serait possible de remonter à $\sigma$, ce qui permettrait de calculer E directement à partir des relations V ou VI.

Une première méthode consiste à déterminer la contrainte absolue en utilisant la relation de Stoney et en faisant l'hypothèse que la courbure initiale est connue, i.e. la courbure du substrat avec couche relaxée est connue. Ensuite afin de connaître la contrainte en fonction de βRC, le βRC en fonction de W est mesuré, ce qui permet d'obtenir la valeur de la contrainte.

Une autre méthode plus avantageuse consiste à supposer que les composantes intrinsèques, autres que les résultantes de la courbure et invariantes de βRC seraient parfaitement connues, par exemple la largeur liée aux défauts cristallins, la largeur de « Darwin » liée à la théorie dynamique XRD, ainsi que la largeur liée au parallélisme du faisceau.

Connaissant ces invariants, il est possible de calculer la partie du βRC liée à la contrainte (courbure) et calculer la contrainte avec l'équation de Stoney.

Grâce à l'invention en une seule série de trois mesures par diffraction RX, une mesure pour chaque étape a), b) et c), il est possible de calculer le coefficient de Poisson et le module d'élasticité d'un film mince. Une mesure consiste en l'illumination de l'échantillon par le faisceau de rayons X incidents et en la collecte des rayons X diffractés. Une mesure prend quelques minutes, par exemple 10 min.

Lors des étapes a) et b), l'échantillon est fixe.

Lors de l'étape c), l'échantillon est pivoté de sorte à modifier l'angle $\omega$ entre le faisceau incident et la surface de l'échantillon. La mesure consiste à acquérir les rayons X diffractés pour les différents angles afin d'obtenir un courbe RC complète afin de pouvoir mesurer le $\beta_{RC}$.

Dans un mode de réalisation préféré, on fait varier la contrainte ou la déformation dans le domaine élastique lors des étapes a), b) et c), permettant de faire une régression linéaire sur un intervalle des courbes obtenues, ce qui permet d'améliorer la précision de calcul des constantes élastiques. Pour cela, on applique une sollicitation mécanique au film mince et on mesure in situ la variation de la contrainte ou de la déformation.

Plusieurs techniques peuvent être mises en œuvre pour solliciter le film mince.

Par exemple, une technique met en œuvre un porte-échantillon muni d'une platine spécifique de traction modifiant la déformation biaxiale de la couche mince. Celle-ci est installée sur le goniomètre. Néanmoins, une telle méthode nécessite de déposer la couche sur un substrat flexible, ce qui complique sensiblement la préparation d'échantillon. Par exemple un substrat en Si ne peut pas être utilisé.

Une autre technique consiste à faire varier la contrainte ou la déformation dans le film mince par variation de la température.

Pour cela, on choisit un substrat qui présente un coefficient de dilatation différent de celui du film mince, et en appliquant un cyclage en température, par exemple en imposant une variation de température par exemple par palier, l'état de contrainte dans le film est modifié. La contrainte dans le film mince est modifiée par une composante thermique de contrainte qui s'exprime de manière suivante :

$$\sigma_{\text{th}} = \left(\frac{E_f}{1 - v_f}\right)(\alpha_f - \alpha_s)(T_1 - T_0)$$

$\alpha_f$ est le coefficient de dilatation, également appelé coefficient d'expansion thermique pour le film, et $\alpha_s$ est le coefficient de dilatation ou d'expansion thermique pour le substrat.

Cette méthode implique de prendre en compte une correction de dilatation sur le paramètre de maille libre de contrainte pour le calcul des déformations associées.

Une technique particulièrement avantageuse consiste à modifier la contrainte ou la déformation du film mince par une modification structurale du film lui-même qui a lieu à température constante.

Dans la présente demande, on entend par modification structurale : une variation de volume résultant d'une transition de phase, une cristallisation en partant d'une couche mince amorphe ou en partie amorphe, une densification, un changement de phase, une relaxation, etc.

La modification structurale modifie la contrainte ou la déformation dans le film. Le fait de travailler à température constante n'induit pas d'erreur sur la détermination de la variation de déformation puisque la dilatation est dans ce cas constante.

La variation de la contrainte ou de déformation peut résulter d'une ou plusieurs modifications structurales.

Les mécanismes de variation de contrainte ou de déformation dépendent du matériau du film mince.

En outre, cette technique ne requiert pas de mettre en œuvre de platine spécifique.

La valeur de la température constante est choisie de sorte à provoquer la modification structurale et de manière à rendre compatible la cinétique de mesure et la cinétique de la modification structurale du film, par exemple la cinétique de cristallisation, i.e. la température constante choisie est telle qu'elle provoque cette modification structurale dans un temps adapté à une mesure par diffraction RX, et à synchroniser la cinétique de mesure et la cinétique de cristallisation.

Par exemple, dans le cas d'un film mince en cuivre, la température choisie est par exemple comprise entre 150°C et 250°C, température à laquelle on observe une croissance des grains et une relaxation. Dans le cas d'un film de Ni$_x$Si$_y$, on observe une transition de phase provoquant une variation de volume à une température proche de 200°C.

La température est choisie de sorte à être inférieure à la température de fusion du film mince et du substrat.

De préférence, on choisit un substrat de bonne qualité monocristalline, i.e. un substrat sans défauts structuraux cristallins pour augmenter la précision de mesure.

De préférence également, on choisit une épaisseur de film importante et/ou une épaisseur de substrat faible pour augmenter la précision de mesure, de préférence hs$^2$/hf < 0.3.

Un exemple va être décrit pour illustrer la méthode de calcul des constantes élastiques en appliquant une sollicitation au film mince à température constante.

Le film mince est un verre amorphe, par exemple un GST (Germanium Antimoine Tellure). L'échantillon comporte un substrat en silicium orienté <001>. En variante, le substrat peut être orienté <111> ou selon une autre orientation. La couche mince a une épaisseur de 500 nm. Le substrat a dans cet exemple une épaisseur de 230 $\mu$m

L'installation de mesure comporte une chambre de recuit sous vide primaire qui peut être installée sur le goniomètre, dans laquelle est placé l'échantillon afin de lui appliquer une température de recuit Tx constante, et ainsi faire passer progressivement le film mince d'un état amorphe à un état au moins en partie cristallisé. La température de recuit est par exemple égale à 125°C. La chambre de recuit est telle qu'elle permet l'illumination de l'échantillon par le faisceau incident et la collecte des rayons diffractés par le détecteur.

La cristallisation progressive du film mince provoque une variation des déformations hors-plan et dans le plan du film ou une variation de la contrainte. La valeur de la température constante est choisie de manière à rendre compatible la cinétique de mesure et la cinétique de cristallisation.

Lors de l'étape a), on place l'échantillon à la température constante choisie et on effectue des mesures de diffraction par rayons X pendant une durée suffisante pendant laquelle la cristallisation va avoir lieu. Les mesures sont effectuées de manière ponctuelle, par exemple à intervalle régulier, l'intervalle de temps étant au moins égal à la durée d'acquisition du signal de diffraction RX, par exemple de l'ordre de 10 min.

Sur la figure 2, on peut voir l'évolution du paramètre de maille d hors plan (d⊥) du film mince en Angström en fonction du temps en minutes et l'aire du pic de diffraction , i.e. l'intensité des faisceaux diffractés, lors de la mesure de diffraction. Le paramètre de maille d⊥ hors-plan est calculé à partir de la position du pic de diffraction.

Sur la figure 3, on peut voir l'évolution du paramètre de maille d (d//) dans le plan du film mince en Angström en fonction du temps en min et l'aire $A_{/\!/}$ du pic de diffraction, i.e. l'intensité des faisceaux diffractés, de la mesure de diffraction. Le paramètre de maille $d_{/\!/}$ dans le plan est calculé à partir de la position du pic de diffraction.

Ces mesures de diffraction RX ne sont pas simultanées, on effectue par exemple en premier les mesures pour le paramètre de maille hors-plan et en deuxième celles pour le paramètre de maille dans le plan.

On constate que les paramètres de maille hors-plan et dans le plan évoluent durant les 500 premières minutes, puis deviennent sensiblement constants. Le paramètre de maille dans le plan augmente et le paramètre de maille hors plan diminue. Ceci est caractéristique d'une mise en tension (contrainte positive) du matériau au cours du recuit isotherme. On remarque également que pendant les premières étapes de la nucléation, pour des temps d'environ 100 minutes, que le paramètre de maille dans le plan et hors-plan est quasiment le même, environ 3,0255 Å, et que cette valeur correspond au paramètre de maille libre de contrainte.

Dans la présente demande, on entend par «valeur sensiblement constante », une valeur qui varie dans un intervalle de + ou - 10% par rapport à une valeur donnée.

Lors de l'étape b), à partir des valeurs de paramètres de maille dans le plan et hors-plan, on peut calculer la déformation dans le plan $\varepsilon_{/\!/}$ et la déformation hors-plan $\varepsilon^{\perp}$ en utilisant la formule (I). $d_0$ peut déterminée en faisant l'hypothèse que dans les tous premiers stades initiaux de nucléation du GST, le matériau est relaxé, on peut donc extraire la valeur de $d_0$ de la figure 2 ou de la fig3, il est égal à 3.0255A.

Lors de l'étape c), on détermine la variation de contrainte.

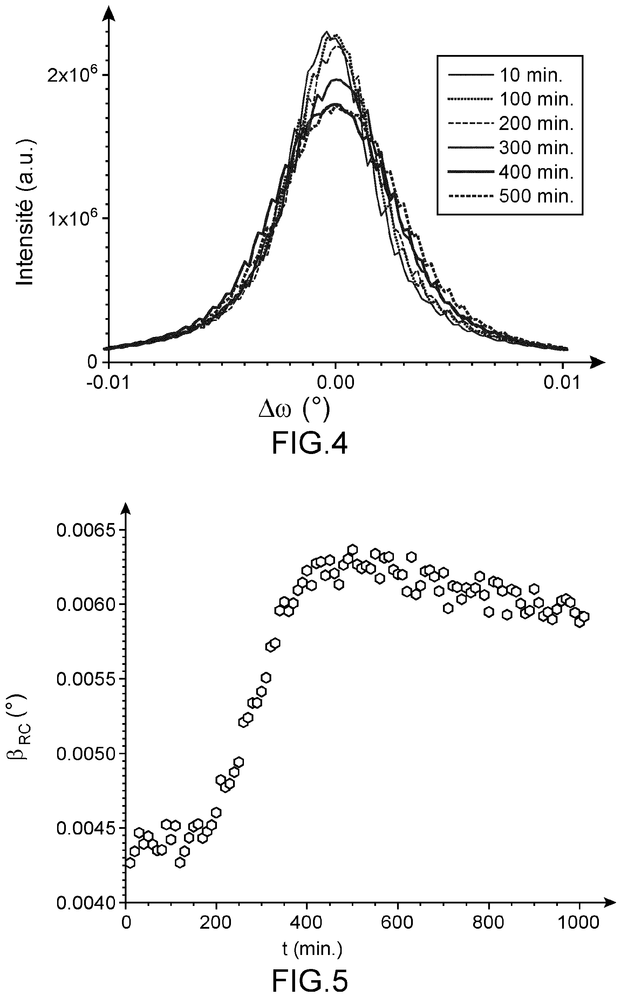

Pour cela, on modifie avantageusement les optiques du diffractomètre pour passer à une mesure de diffraction haute résolution du substrat. Comme cela a été expliqué plus haut, l'échantillon est pivoté de sorte à modifier l'angle $\omega$ entre le faisceau incident et la surface de l'échantillon, afin d'acquérir les rayons X diffractés pour différents angles, dans le but d'obtenir une courbe RC complète et déterminer le $\beta_{RC}$. Sur la figure 4, on peut voir un exemple de rocking curve représentant la variation d'intensité diffractée en fonction de la variation d'angle $\Delta\omega$ en degrés ° aux différents instants de mesure.

Dans cet exemple, l'échantillon a été séparé en trois parties, avec une partie utilisée pour l'étape a), une partie utilisée pour l'étape b) (différente de celle utilisée pour a)) et une autre partie est utilisée pour l'étape c) (différente de celles utilisées aux étapes a) et b)).

Dans un autre exemple, les mesures sont automatisées et les étapes a), b), et c) sont enchaînées avec, entre chaque étape, un changement d'optique automatisé, ce qui permet de réaliser la série de mesure sur la même partie d'échantillon et lors du même recuit. Le programme de mesure est alors exécuté une seule fois.

Dans un autre exemple, entre chaque étape le film est rendu amorphe et subit l'étape suivante et le recuit suivant. Le film est rendu amorphe en le chauffant de sorte à ce que le matériau du film atteigne sa température de fusion et qu'il soit vitrifié.

Sur la figure 5, on peut voir la variation de $\beta_{RC}$ en degrés °, déterminée à partir de la courbe RC, en fonction du temps en minutes. La mesure de $\beta_{RC}$ présente également une variation au cours de 500 premières minutes. L'augmentation du $\beta_{RC}$ indique une évolution de la courbure, en général une augmentation de celle-ci. Ces variations sont en cohérence avec une mise en tension progressive du matériau, ce qui démontre l'efficacité de la sollicitation à température constante pour faire varier la contrainte (ou la déformation) dans le film mince. Entre 500 min et 1000 min, le $\beta_{RC}$ diminue très légèrement, ce qui correspond à une relaxation.

Cette variation est directement proportionnelle à la variation de contrainte $\Delta\sigma$ (formule III).

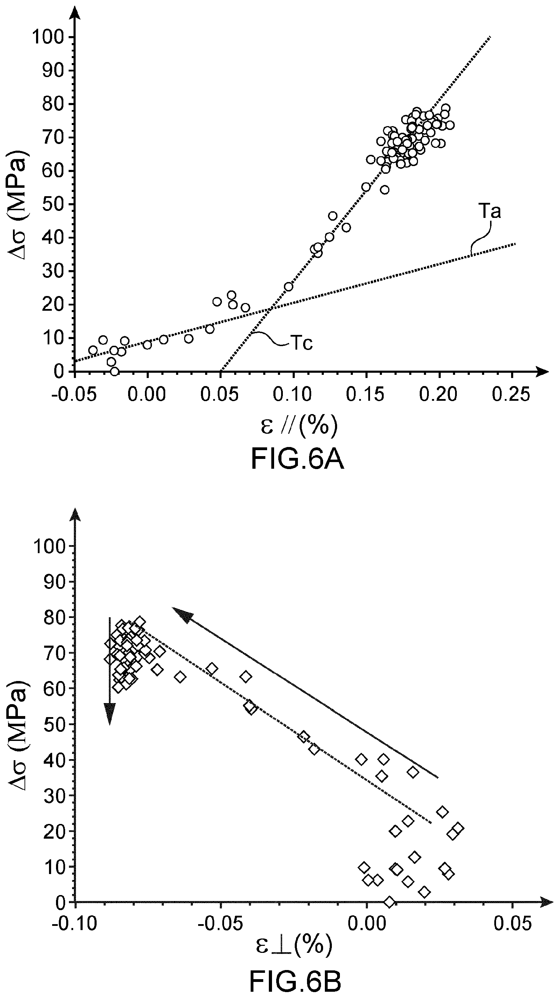

En connaissant les constantes de la formule II et ayant mesuré $\beta_{RC}$, on peut calculer la variation de contrainte $\Delta\sigma$ et tracer la courbe de variation de contrainte $\Delta\sigma$ en fonction de la déformation dans le plan $\varepsilon_{/\!/}$ et la déformation hors-plan $\varepsilon^{\perp}$ en utilisant les calculs de la déformation dans le plan $\varepsilon_{/\!/}$ et de la déformation hors-plan $\varepsilon^{\perp}$ (figures 6A et 6B).

Sur la figure 6A, On constate que la première partie de la courbe n'est pas linéaire du fait de la cristallisation.

Après 500 minutes, ce qui correspond sensiblement à la partie de la courbe entre 60 MPa et 80 MPa sur la figure 6A, on retrouve le comportement élastique qui correspond au matériau complètement cristallisé.

En utilisant les mesures sur la phase complètement cristallisée (quasi cristalline), pour lesquelles la partie de la courbe de variation de contrainte ($\Delta\sigma$) en fonction de la déformation est quasiment linéaire à la fois en fonction de la déformation dans le plan et hors-plan, on peut déterminer la valeur de E/1-v qui est la pente de la courbe de déformation dans la plan - contrainte, et la valeur -E/2v qui est la pente de la courbe de déformation hors-plan - contrainte.

On peut alors déterminer E et v en résolvant le système de deux équations à deux inconnus.
On obtient : E = 34 GPa et v = 0,34

L'invention permet également de déterminer le module d'Young E d'un matériau comportant une phase cristalline et une phase amorphe.

La partie de la courbe déformation dans le plan - contrainte avant les 500 minutes n'est pas linéaire car le matériau du film mince n'est pas complètement cristallisé. En choisissant le coefficient de Poisson égal par exemple à 0,28, qui est une valeur courante pour un verre, il est possible de déterminer le module de Young de la couche très faiblement cristallisée en traçant la tangente Ta à la courbe et en mesurant sa pente. On peut également calculer le module d'Young du matériau cristallisé en traçant la tangente Tc à la partie de la courbe après 500 min. On obtient : $E_{cristallin}$ = 37 GPa et $E_{amorphe}$

= 9 GPa La droite Tc correspondant à la zone cristalline et la droite Ta, est une extrapolation pour la zone amorphe. Entre les deux états limites, une tangente intermédiaire correspondant à un état intermédiaire, présentant des parties amorphes et des parties cristallines, peut être tracée. Un module d'Young de cet état intermédiaire peut être alors calculé.

La méthode selon l'invention présente de nombreux avantages :

- la détermination de la variation de contrainte, $\Delta\sigma$, à partir de la mesure de $\beta_{RC}$ lors de l'étape c) ne nécessite qu'une seule mesure et est plus rapide que les méthodes préexistantes. En outre, le fait de travailler en relatif, i.e. $\Delta\beta_{RC}$ permet aussi de s'affranchir de la courbure initiale.
- la méthode ne nécessite pas de préparation d'échantillon spécifique, par exemple une couche mince déposée sur un substrat monocristallin, par exemple un substrat en silicium 001, convient.

La méthode permet de travailler sur une petite surface d'échantillon pour mesurer la courbure de l'échantillon, par exemple quelques mm$^2$, alors que la méthode x-map nécessite une plus grande surface, par exemple au moins 1 cm$^2$.

La méthode de ne nécessite pas d'utiliser un diffractomètre comportant une platine de translation pour faire du x-map : ce type de platine est souvent incompatible avec les modes diffraction dans le plan.

La méthode selon l'invention peut être mise en œuvre grâce à un diffractomètre qui change automatiquement d'optiques et de configurations pour réaliser les trois séries de mesures successivement. Ainsi, l'acquisition des différentes mesures requises par la méthode peut être réalisée en une seule exécution du programme de mesures.

Dans le cas où la sollicitation est réalisée à température constante, la méthode n'est pas sensible à l'éventuelle méconnaissance de la dilatation de la couche mince.

Le fait de fait de travailler à température constante limite les effets de variation de dilatation du goniomètre et de la platine de recuit, ce qui limite les alignements nécessaires. La fiabilité de mesure est améliorée en réduisant les éventuelles erreurs d'alignement principalement sur la mesure des déformations.

Le fait de travailler à température constante permet également d'effectuer toutes les mesures sur le même échantillon.

**Revendications**

**1.** Procédé de détermination du module élastique E et du coefficient de poisson v d'un film mince formé sur un substrat, comportant :

a) une détermination d'une déformation hors-plan par diffraction de rayons X,
b) une détermination d'une déformation dans le plan du film mince par diffraction de rayons X,
c) une détermination d'une contrainte dans le film par mesure de la largeur à mi-hauteur $\beta_{RC}$ de la rocking curve par diffraction de rayons X du substrat,
d) un calcul du coefficient de poisson v à partir de la déformation dans le plan et de la déformation hors-plan,
e) un calcul du module élastique E à partir de la contrainte déterminée à l'étape c) et du coefficient de poisson v déterminé à l'étape d) ;
le procédé de détermination étant tel qu'au moins lors de l'étape c), on applique une variation de contrainte ou de déformation au film mince, de sorte que le film mince passe d'un premier état à un deuxième état et on détermine la variation de contrainte dans le film mince par détermination d'une variation de $\beta_{RC}$ à partir d'une série de mesures de diffraction par diffraction de rayons X à différents instants ;
Le procédé comportant en outre :

- lors de l'étape a), une application d'une variation de contrainte ou de déformation au film mince, de sorte que le film mince passe d'un premier état à un deuxième état et une détermination de la déformation hors-plan à partir d'une série de mesures par diffraction de rayons X à différents instants,
- lors de l'étape b), une application d'une variation de contrainte ou de déformation au film mince, de sorte que le film mince passe du premier état au deuxième état et une détermination de la déformation dans le plan à partir d'une série de mesures par diffraction de rayons X à différents instants,
- un traçage de l'évolution de la contrainte en fonction de la déformation hors-plan de manière à obtenir une régression linéaire sur au moins un intervalle de ladite variation et un calcul de la pente de la régression linéaire qui est égale à -E/2v,
- un traçage de l'évolution de contrainte en fonction de la déformation dans le plan de manière à obtenir une régression linéaire sur au moins un intervalle de ladite variation et un calcul de la pente de ladite régression linéaire qui est égale à E/1-v, et
- une détermination du module d'élasticité E et du coefficient de poisson v à partir des valeurs de pentes obtenues.

**2.** Procédé de détermination selon la revendication 1, dans lequel les étapes a) et b) comportent respectivement la mesure du paramètre de maille hors-plan et la mesure du paramètre de maille dans le plan.

3. Procédé de détermination selon la revendication 1 ou 2, dans lequel les mesures sont réalisées au moyen d'un goniomètre, et dans lequel les étapes a) à c) sont réalisées successivement sur un même goniomètre.

4. Procédé de détermination selon la revendication 3, dans lequel le goniomètre est réglé entre deux étapes de détermination.

5. Procédé de détermination selon l'une des revendications 1 à 4, dans lequel l'étape c) est une mesure de diffraction de rayons X à haute résolution.

6. Procédé de détermination selon la revendication 1, dans lequel l'application d'une variation de contrainte ou de déformation au film mince pendant les première et deuxième étapes et/ou la troisième phase s'effectue à température constante dont la valeur assure le passage du premier état au deuxième état.

7. Procédé de détermination selon la revendication 6, dans lequel la variation de contrainte ou de déformation du film est due à un passage d'un état au moins en partie amorphe à un état au moins en partie cristallin, à un changement de volume, à un changement de phase, à une densification ou à une relaxation.

8. Procédé de détermination selon la revendication 7, dans lequel l'échantillon est placé dans une chambre de recuit autorisant les rayons X atteindre le film mince et la collecte des rayons X diffractés.

9. Procédé de détermination selon l'une des revendications 1 à 8, dans lequel un traitement est appliqué au film mince entre deux séries de mesures de sorte qu'il soit dans le premier état, par exemple amorphe.

**Patentansprüche**

1. Verfahren zum Bestimmen des Elastizitätsmoduls E und der Dehnungszahl v eines auf einem Substrat gebildeten Dünnfilms, das beinhaltet:

a) ein Bestimmen einer Verformung außerhalb der Ebene durch Röntgenstrahlen-Beugung,
b) ein Bestimmen einer Verformung in der Ebene des Dünnfilms durch Röntgenstrahlen-Beugung,
c) ein Bestimmen einer Spannung in dem Film durch Messen Breite bei halber Höhe $\beta_{RC}$ der Schwingkurve durch Röntgenstrahlen-Beugung des Substrats,
d) ein Berechnen der Dehnungszahl v aus der Verformung in der Ebene und der Verformung außerhalb der Ebene,
e) ein Berechnen des Elastizitätsmoduls E aus der in Schritt c) bestimmten Spannung und der in Schritt d) bestimmten Dehnungszahl v;
wobei das Verfahren zum Bestimmen derart ist, dass mindestens in Schritt c) eine Spannungs- oder Verformungsvariation auf den Dünnfilm angewendet wird, sodass der Dünnfilm von einem ersten Zustand in einen zweiten Zustand übergeht und die Spannungsvariation im Dünnfilm durch Bestimmen einer Variation $\beta_{RC}$ aus einer Reihe von Röntgenstrahlen-Beugungsmessungen zu verschiedenen Zeitpunkten bestimmt wird;
wobei das Verfahren weiter beinhaltet:

- in Schritt a) ein Anwenden einer Spannungs- oder Verformungsvariation auf den Dünnfilm, sodass der Dünnfilm von einem ersten Zustand in einen zweiten Zustand übergeht, und ein Bestimmen der Verformung außerhalb der Ebene aus einer Reihe von Röntgenstrahlen-Beugungsmessungen zu verschiedenen Zeitpunkten,
- in Schritt b) ein Anwenden einer Spannungs- oder Verformungsvariation auf den Dünnfilm, sodass der Dünnfilm von dem ersten Zustand in den zweiten Zustand übergeht, und ein Bestimmen der Verformung in der Ebene aus einer Reihe von Röntgenstrahlen-Beugungsmessungen zu verschiedenen Zeitpunkten,
- ein Rückverfolgen des Spannungsverlaufs in Abhängigkeit von der Verformung außerhalb der Ebene, um eine lineare Regression über mindestens ein Intervall der Variation zu erhalten und ein Berechnen der Steigung der linearen Regression, die gleich -E/2 v ist,
- ein Rückverfolgen des Spannungsverlaufs in Abhängigkeit von der Verformung in der Ebene, um eine lineare Regression über mindestens ein Intervall der Variation zu erhalten und ein Berechnen der Steigung der linearen Regression, die gleich E/1- v ist, und
- ein Bestimmen des Elastizitätsmoduls E und der Dehnungszahl v aus den erhaltenen Steigungswerten.

2. Verfahren zum Bestimmen nach Anspruch 1, wobei die Schritte a) und b) jeweils das Messen der Gitterkonstante außerhalb der Ebene und das Messen der Gitterkonstante in der Ebene beinhalten.

**3.** Verfahren zum Bestimmen nach Anspruch 1 oder 2, wobei die Messungen mittels eines Winkelmessers durchgeführt werden, und wobei die Schritte a) bis c) nacheinander an einem selben Winkelmesser durchgeführt werden.

**4.** Verfahren zum Bestimmen nach Anspruch 3, wobei der Winkelmesser zwischen zwei Bestimmungsschritten eingestellt wird.

**5.** Verfahren zum Bestimmen nach einem der Ansprüche 1 bis 4, wobei der Schritt c) eine hochauflösende Röntgenstrahlen-Beugungsmessung ist.

**6.** Verfahren zum Bestimmen nach Anspruch 1, wobei das Anwenden einer Spannungs- oder Verformungsvariation auf den Dünnfilm während des ersten und zweiten Schritts und/oder der dritten Phase bei konstanter Temperatur erfolgt, deren Wert den Übergang vom ersten Zustand in den zweiten Zustand gewährleistet.

**7.** Verfahren zum Bestimmen nach Anspruch 6, wobei die Spannungs- oder Verformungsvariation des Films auf einen Übergang von einem mindestens teilweise amorphen Zustand in einen mindestens teilweise kristallinen Zustand, eine Volumenänderung, eine Phasenänderung, eine Verdichtung oder eine Entspannung zurückzuführen ist.

**8.** Verfahren zum Bestimmen nach Anspruch 7, wobei das Muster in einer Temperkammer platziert wird, die es ermöglicht, dass die Röntgenstrahlen den Dünnfilm erreichen, und die gebeugten Röntgenstrahlen zu sammeln.

**9.** Verfahren zum Bestimmen nach einem der Ansprüche 1 bis 8, bei dem eine Behandlung auf den Dünnfilm zwischen zwei Messreihen angewendet wird, sodass er sich im ersten, beispielsweise amorphen Zustand, befindet.

**Claims**

**1.** Method for determining the elastic modulus E and the Poisson's ratio v of a thin film formed on a substrate, comprising:

a) determining an out-of-plane deformation by X-ray diffraction,
b) determining an in-plane deformation of the thin film by X-ray diffraction,
c) determining a stress in the film by measuring the half width $\beta_{RC}$ of the rocking curve by X-ray diffraction of the substrate,
d) calculating the Poisson's ratio v from the in-plane deformation and the out-of-plane deformation,
e) calculating the elastic modulus E from the stress determined in step c) and the Poisson's ratio v determined in step d);
the determination method being such that at least in step c), a change in stress or deformation is applied to the thin film, such that the thin film changes from a first state to a second state and the stress change in the thin film is determined by determining a change in $\beta_{RC}$ from a series of X-ray diffraction measurements at different times;
the method further comprising:

- in step a), applying a change in stress or deformation to the thin film, such that the thin film changes from a first state to a second state and determining the out-of-plane deformation from a series of measurements by X-ray diffraction taken at different times,
- in step b), applying a change in stress or deformation to the thin film, so that the thin film changes from the first state to the second state and determining the in-plane deformation from a series of measurements by X-ray diffraction taken at different times,
- plotting the stress evolution as a function of the out-of-plane deformation so as to obtain a linear regression over at least one interval of said change and a calculation of the slope of the linear regression which is equal to -E/2v,
- plotting the stress evolution as a function of the in-plane deformation so as to obtain a linear regression over at least one interval of said change and a calculation of the slope of said linear regression which is equal to E/1-v, and
- determining the elastic modulus E and the Poisson's ratio v from the slope values obtained.

**2.** Determination method according to claim 1, wherein steps a) and b) respectively comprise measuring the out-of-plane mesh parameter and measuring the in-plane mesh parameter.

**3.** Determination method according to claim 1 or 2, wherein the measurements are carried out by means of a goniometer, and wherein steps a) to c) are carried out successively on the same goniometer.

**4.** Determination method according to claim 3, wherein the goniometer is adjusted between two determination steps.

**5.** Determination method according to any one of claims 1 to 4, wherein step c) is a high resolution X-ray diffraction measurement.

6. Determination method according to claim 1, wherein the application of a stress or deformation change to the thin film during the first and second steps and/or the third phase is carried out at a constant temperature, the value of which ensures the transition from the first state to the second state.

7. Determination method according to claim 6, wherein the change in stress or deformation of the film is due to a transition from an at least partially amorphous state to an at least partially crystalline state, a change in volume, a phase change, densification or relaxation.

8. Determination method according to claim 7, wherein the sample is placed in an annealing chamber that allows X-rays to reach the thin film and the collection of diffracted X-rays.

9. Determination method according to any one of claims 1 to 8, wherein a treatment is applied to the thin film between two series of measurements so that it is in the first state, for example amorphous.

FIG.1

FIG.2

FIG.3

FIG.4

FIG.5

FIG.6A

FIG.6B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **E. EIPER** ; **K. J. MARTINSCHITZ** ; **J. KECKES**. Combined elastic strain and macroscopic stress characterization in polycrystalline Cu thin films. *Powder Diffraction*, 2006, vol. 21 (1)

- **FU WEI-EN et al.** Determination of Young's modulus and Poisson's ratio of thin films by X-ray method. *Thin Solid Films*, 2013, vol. 544, 201-205